Europäisches Patentamt

**European Patent Office**

**Office européen des brevets**

(11) Veröffentlichungsnummer: **0 005 169**
**A1**

(12) **EUROPÄISCHE PATENTANMELDUNG**

(21) Anmeldenummer: 79100970.7

(22) Anmeldetag: 30.03.79

(51) Int. Cl.²: **B 65 G 1/04**

(30) Priorität: 25.04.78 DE 2817994

(43) Veröffentlichungstag der Anmeldung: 14.11.79
Patentblatt 79/23

(84) Benannte Vertragsstaaten: **BE CH FR GB IT LU NL**

(71) Anmelder: **M.A.N. Lager- und Systemtechnik GmbH,**
**Postfach 500441 Ehrenbreitsteiner Strasse 44, D-8000**
**München 50 (DE)**

(84) Benannte Vertragsstaaten: **BE CH FR GB IT LU NL**

(71) Anmelder: **Licentia Patent-Verwaltungs-GmbH,**
**Theodor-Stern-Kai 1, D-6000 Frankfurt/Main 70 (DE)**

(84) Benannte Vertragsstaaten: **BE CH FR GB IT LU NL**

(72) Erfinder: **Flitsch, Hans, Wagnerstrasse 17, D-6074**
**Rödermark (Urberach) (DE)**
Erfinder: **Martin, Gerd, Waldfriedhofstrasse 64, D-8000**
**München 70 (DE)**
Erfinder: **Baumann, Manfred, Tannenstrasse 19,**
**D-8031 Puchheim (DE)**
Erfinder: **Janka, Helmut, Sommerhalde 1, D-7244**
**Waldachtal 2 (DE)**

(54) **Dynamischer Speicher.**

(57) Die Erfindung betrifft einen dynamischen Speicher für Stück- und/oder Schüttgut, insbesondere unterschiedlicher Art, der als Turmdrehspeicher ausgebildet ist und eine senkrecht stehende, mit wenigstens einer Füllöffnung (2) und einer Ausstoßöffnung (3) versehene Trommel (4) aufweist, in der an einem zentrisch angeordneten Mast (7) ein in senkrechter Richtung verschiebbar angebrachter Rahmen (13) vorgesehen ist, an dem ein mehrere Etagen und in jeder Etage am Umfang verteilt mehrere fachartige Lagerplattformen (24) aufweisendes Tragelement (23) drehbar gelagert ist. Durch dieses Speichern soll in einfacher Weise ein schnelles Sammeln und/oder auch Lagern von als Einzelpositionen eingegebenen Stück- oder Schüttgut und Wiederausgeben desselben als Einzelposition oder in Form von beliebig zusammenstellbaren Gruppen möglich werden.

EP 0 005 169 A1

ACTORUM AG

-1-

M.A.N. Lager- und Systemtechnik GmbH, 8ooo München 50
und

Licentia Patent-Verwaltungs-GmbH, 6ooo Frankfurt/M. 7o

Nürnberg, 16. Februar 1979

## Dynamischer Speicher

Die Erfindung betrifft einen dynamischen Speicher für
Stück- und/oder Schüttgut, insbesondere unterschiedlicher
Art.

Stück- und/oder Schüttgut wird im allgemeinen in Hochregellagern oder Durchlauflagern gespeichert. Dazu wird es durch
Förderbänder oder Rollenstraßen angeliefert, von einem
Regalförderzeug aufgenommen und einzeln oder in kleinen
Gruppen in die jeweils dafür bestimmten Regale oder Durchlaufkanäle einsortiert. Die Ausgabe des Stück- und/oder
Schüttgutes erfolgt in umgekehrter Reihenfolge, wobei
das Zusammenstellen von verschiedenen Waren, beispielsweise für einen bestimmten Auftrag, vom Regalförderzeug
vorzunehmen ist, welches in umständlicher und zeitraubender Weise die Regale oder Durchlaufkanäle, in denen sich
die Waren befinden, anfahren, die Ware herausnehmen und
dann einzeln der Reihe nach auf dem Förderband o.ä. absetzen muß.

08 8599

./.

Um die Ein- und Auslagerungszeit zu verkürzen, wurde bereits ein zwischen den Regalen verfahrbares Regalförderzeug entwickelt, welches im Fahr- und Ladebetrieb mit einem oder mehreren, ebenfalls verfahrbaren Speicherregalen verbunden ist, deren Anordnung, Höhe und Aufteilung denen der feststehenden Regale entspricht (DE-AS 2034 834). Zuerst werden die verfahrbaren Speicherregale, die übrigens auch als Paternoster ausgebildet sein können und daher in gewissem Sinne einen dynamischen Speicher darstellen, beladen, dann fahren sie zusammen mit dem Förderzeug zu den feststehenden Regalen, wo die Stückgüter einzeln umgeladen werden. Das Wiederausladen erfolgt ebenfalls in umgekehrter Reihenfolge.

Eine derartige Anordnung eignet sich gut, wenn es sich um eine große Anzahl von Stückgütern handelt, die meist längere Zeit gelagert werden sollen. Sie bringt durchaus eine Zeitersparnis, weil das Förderzeug entschieden weniger Wegstrecken und Hubbewegungen auszuführen hat. Für bestimmte Zwecke jedoch, insbesondere zum laufenden Zusammenstellen und Ausgeben von unterschiedlichen Waren für bestimmte Aufträge ist die Anlage noch zu umständlich.

Hier setzt die Erfindung ein, der die Aufgabe zugrunde liegt, einen neuartigen dynamischen Speicher zu schaffen, durch den ohne großen Personalaufwand und ohne einer Reihe von Fördergeräten bzw. -Einrichtungen in einfacher Weise ein schnelles Sammeln und/oder auch Lagern von als Einzelpositionen eingegebenen Stück- oder Schüttgut und wieder Ausgeben desselben als Einzelposition, insbesondere jedoch in Form von beliebig zusammenstellbaren Gruppen möglich ist, und der dazu

./.

wenig Platz benötigt.

Nach der Erfindung wird die Aufgabe dadurch gelöst, daß dieser Speicher als Turmdrehspeicher ausgebildet ist und eine senkrecht stehende, mit wenigstens einer Füllöffnung und einer Ausstoßöffnung versehene Trommel aufweist, in der an einem zentrisch angeordneten Mast ein in senkrechter Richtung verschiebbar angebrachter Rahmen vorgesehen ist, an dem ein mehrere Etagen und in jeder Etage am Umfang verteilt mehrere fachartige Lagerplattformen aufweisendes Tragelement drehbar gelagert ist.

Ein derartiger Speicher ist auf einer relativ kleinen Fläche unterbringbar, und es gibt kein zeitraubendes Hin- und Herfahren des Förderzeuges und auch kein Umschichten der Ware mehr. Je nach Wahl des gewünschten Gutes hebt oder senkt sich der Rahmen und das Tragelement dreht sich, bis die entsprechende Lagerplattform vor der Ausstoßöffnung zu liegen kommt. Der Bedienungsperson wird also die Ware griffgerecht präsentiert, denn hier bewegt sich nur letztere, während die Bedienungsperson steht. Beim Zusammenstellen einer aus unterschiedlichen Gütern bestehenden Sendung bzw. eines Auftrages werden die gewünschten Waren nur vorgewählt und der Reihe nach an der Ausstoßöffnung angeliefert, ohne daß die Bedienungsperson einen Schritt zu laufen hat. Auch die Einlagerung durch die Füllöffnung bzw. -öffnungen erfolgt problemlos, indem die leeren Lagerplattformen je nach Wunsch vor diese gebracht werden, so daß nur noch ein Einschieben erforderlich wird, was durch Anbringen manuell, hydraulisch, pneumatisch oder elektrisch betätigbarer Einschubvorrichtungen an der Außenseite der Trommel ebenfalls erleichtert werden kann. Was das Ausgeben von Stück- und/oder Schüttgut anbetrifft, so wird übrigens erfindungsgemäß vorgeschlagen, im Bereich der Ausstoßöffnungen am Mast angeordnete Ausschubvorrichtungen bereits vorzusehen, die vorzugsweise als hydrau-

./.

lisch oder pneumatisch angetriebene Hubzylinder ausgebildet sind, aber auch manuell oder elektrisch betätigt werden können.

Im einzelnen wird nach der Erfindung vorgeschlagen, daß die Füllöffnungen und die Ausstoßöffnungen je nach dem Aufstellungsort des dynamischen Speichers an unterschiedlichen Stellen am Umfang der Trommel und auch in unterschiedlichen Höhen anbringbar sind, und daß sie, insbesondere die Füllöffnungen, mit als Türen oder Klappen ausgebildeten Verschlußeinrichtungen versehen sind, die über Endschaltersicherungen nur geöffnet werden können, wenn der drehbare Speicher stillsteht. Auch für die Verschlußeinrichtungen wird empfohlen, diese durch hydraulische, pneumatische oder elektrische Vorrichtungen anzutreiben.

Weiter wird erfindungsgemäß vorgeschlagen, den Mast starr mit einem Fundament zu verbinden und im Querschnitt die Form eines Kastens zu geben, an dessen Außenflächen Führungsschienen für den heb- und senkbaren Rahmen angebracht sind, der diese mit einer Reihe von Führungsrollenpaaren umgreift. Vorzugsweise wird der Mast als Schweißkonstruktion in Gitterform ausgebildet, wodurch sich eine leichte un stabile Bauweise ergibt. Die Höhe des Mastes wird derart ausgelegt, daß durch Heben und Senken des Rahmens und durch Drehen des die Lagerplattformen haltenden Tragelementes jede einzelne Plattform leicht zu den Füllöffnungen und zu den Ausstoßöffnungen verlegbar ist.

Um möglichst viel Lagerraum und eine leichte Zugängigkeit zu schaffen, wird in einer Weiterbildung der Erfindung vorgeschlagen, die eigentlichen Lagerplattformen in radialer Richtung nach außen verlaufend anzubringen. Schließlich schlägt die Erfindung noch vor, daß die Antriebe für den Rahmen und das Tragelement hydraulisch,

./.

pneumatisch oder mittels Elektromotoren erfolgen, wobei zum Heben und Senken des Rahmens eine Seil-Hubwinde, die durch einen Elektromotor angetrieben wird, für besonders zweckmäßig anzusehen ist.

Weitere Einzelheiten der Erfindung können der nachfolgenden Beschreibung eines in den Zeichnungen dargestellten Ausführungsbeispieles entnommen werden. Es zeigen:

Fig. 1 einen Längsschnitt durch den dynamischen Speicher nach der Erfindung,

Fig. 2 einen Schnitt II-II durch den dynamischen Speicher nach Fig. 1,

Fig. 3 einen Schnitt III-III durch den dynamischen Speicher nach Fig. 1,

Fig. 4 einen Schnitt IV-IV durch den Mast des dynamischen Speichers nach Fig. 1.

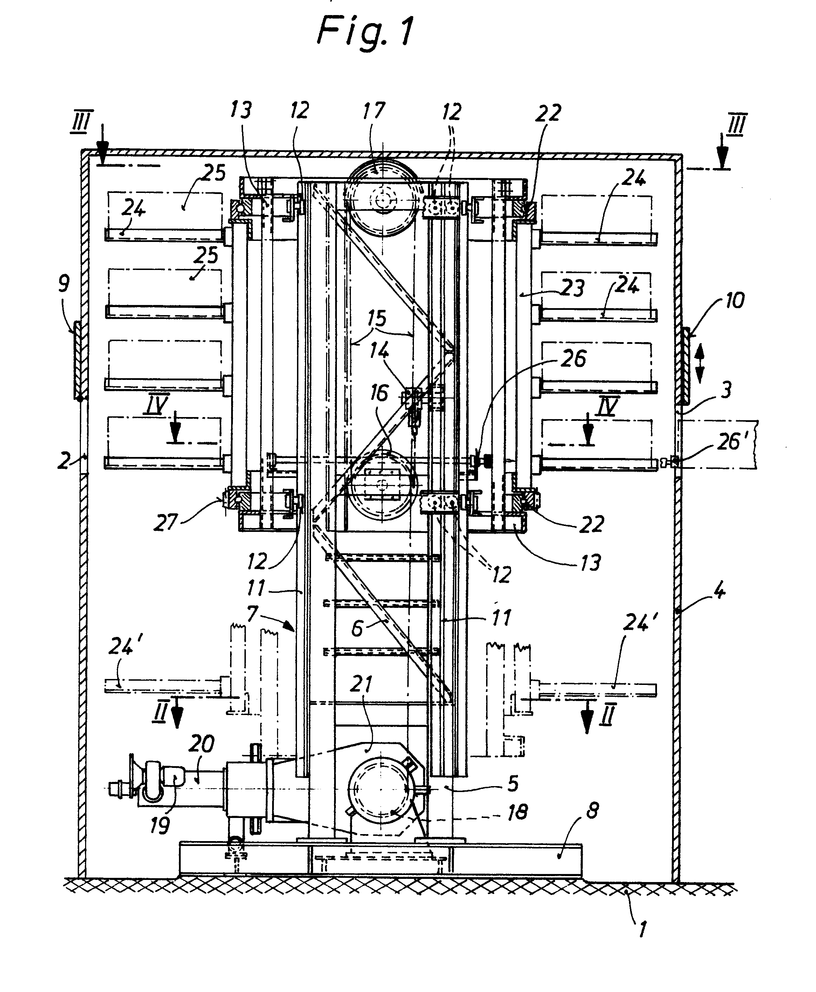

In Fig. 1 ist auf einem vorbereiteten Untergrund 1 eine mit einer Füllöffnung 2 und einer Ausstoßöffnung 3 versehene Trommel 4 befestigt, in der ein aus Profilstäben 5 und Querstreben 6 zusammengeschweißter, im Querschnitt viereckiger Mast 7 auf einem kräftigen Fundament 8 verankert ist. Die Füllöffnung 2 ist durch eine Klappe 9 und die Ausstoßöffnung 3 durch eine Schiebetür 10, vorzugsweise automatisch, verschließbar. Senkrecht am Mast 7 verlaufend sind an allen vier Außenseiten Führungsschienen 11 angebracht, die seitlich von Führungsrollenpaaren 12 umgriffen werden, welche ihrerseits in einem im Querschnitt kreisrunden, ebenfalls aus einzelnen Teilen zusammengeschweißten und -geschraubten und den Mast 7 umschließenden Rahmen 13 gelagert sind. Durch die Führungsrollenpaare 12 ist der Rahmen 13 heb- und senkbar geführt. Ferner weist der Mast 7 Haltebolzen 14 auf, an denen die Enden von Seilen 15 befestigt sind, die über am Rahmen 13 drehbar gelagerte Umlenkrollen 16 und am oberen Ende des Mastes 7 gelagerte Umlenkrollen 17 zu Seiltrommeln 18 einer von einem Elektromotor 19 über ein entsprechendes Getriebe 20 antreibbaren Seil-Hubwinde 21 führen. Je mehr die Seile 15 auf den Seiltrommeln 18 aufgewickelt werden, desto höher wird der Rahmen 13 angehoben, bis er die dargestellte Lage erreicht hat.

Um den Rahmen 13 sind Kugellager 22 angeordnet, in denen ein ringförmiges Tragelement 23 drehbar um den Mast 7 gelagert ist, an dem in mehreren Etagen jeweils gleichmäßig über den Umfang verteilt in radialer Richtung nach außen verlaufende Lagerplattformen 24 vorgesehen sind. Durch Drehen des Tragelementes 23 und entsprechendes Senken des Rahmens 13 sind von der Füllöffnung 2 aus alle Lagerplattformen 24 der Reihe nach mit Stückgut 25, wie strichpunktiert angedeutet, beschickbar. Wenn die oberste Etage der Lagerplattformen 24 in Höhe der Füllöffnung 2 zu liegen kommt, befindet sich die unterste Etage in der strichpunktiert angedeuteten Lage 24'. Das Ausgeben des Stückgutes 25 erfolgt in gleicher Weise, jedoch wird dazu die jeweilige Lagerplattform vor die Ausstoßöffnung 3 gebracht. Um das Auslagern zu erleichtern, ist am Mast 7 eine in Richtung zur Ausstoßöffnung 3 hin wirkende, hier als hydraulisch oder pneumatisch arbeitender Zylinder ausgebildete Ausschubvorrichtung 26 befestigt. Wird diese ausgefahren, so schiebt sie das Stückgut 25 vor sich her, bis sie die angedeutete Endlage 26' erreicht hat und ersteres von weiteren Transporteinrichtungen übernehmbar ist.

Zu erwähnen wäre noch, daß sich unten am Tragelement 23 ein Zahnkranz 27 für seinen Antrieb befindet.

./.

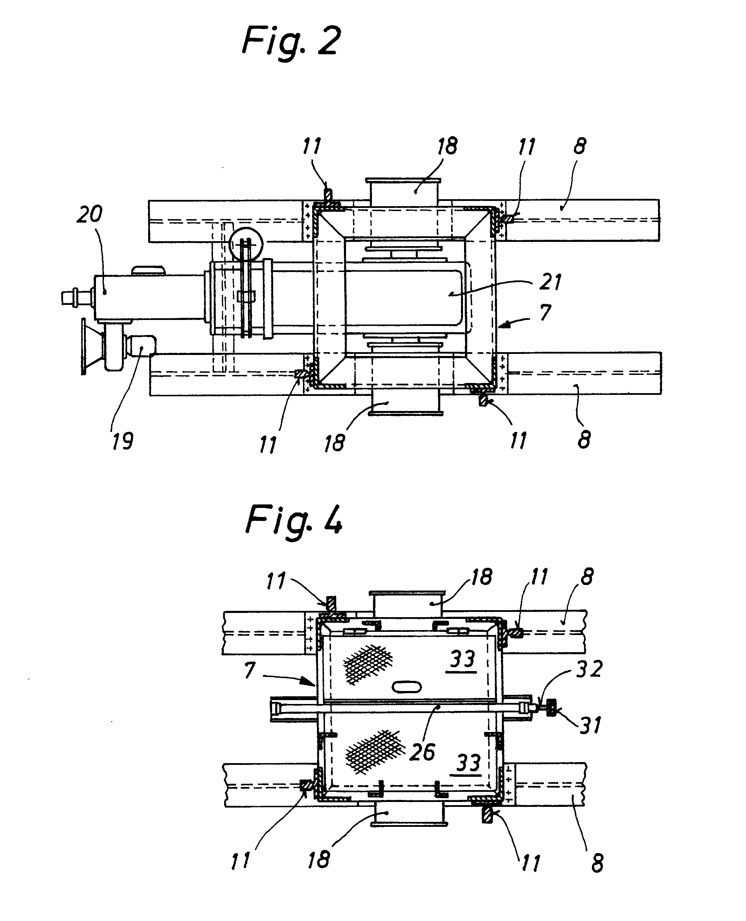

Aus Fig. 2 ist die Ausbildung des Fundamentes 8 und die Anordnung der Führungsschienen 11 am Mast 7 genauer zu ersehen. Auch geht klar hervor, daß die Seilhubwinde 21 zwei Seiltrommeln 18 antreibt, der hier nicht dargestellte Rahmen 13 wird also von zwei Seilen 15 angehoben bzw. abgesenkt.

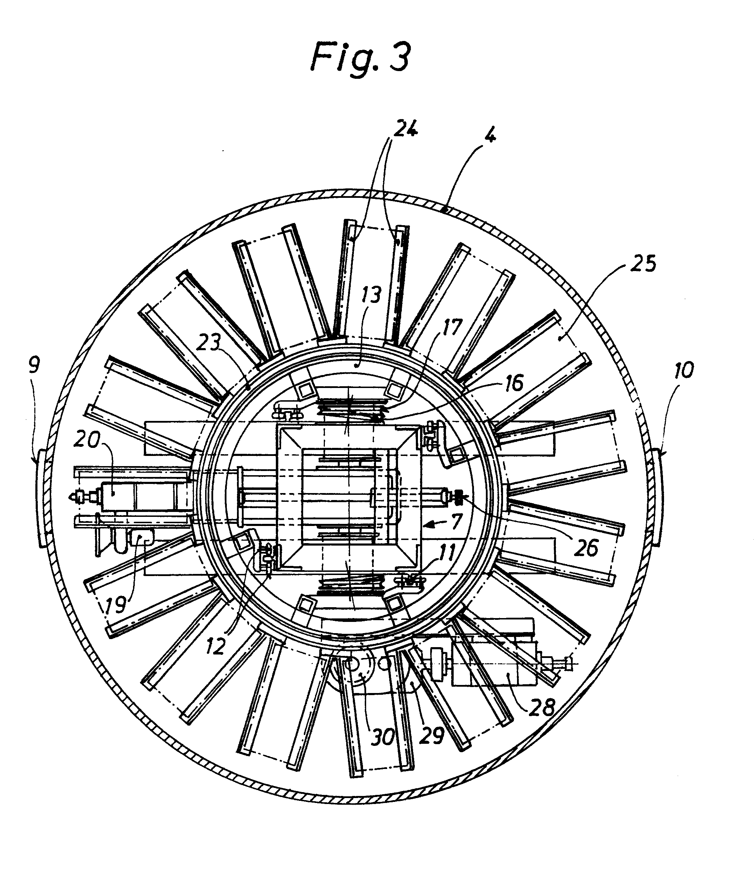

Fig. 3 zeigt vor allem die Anordnung der Lagerplattform 24. Um eine gute Führung der Seile 15 zu erreichen, sind die am Rahmen 13 gelagerten Umlenkrollen 16 nicht parallel, sondern etwas schräg zu den Wänden des Mastes 7 angebracht, während die am Mast 7 gelagerten Umlenkrollen 17 parallel zu diesem liegen. Schließlich ist auch noch ein weiterer Elektroantrieb 28 mit Getriebe 29 angedeutet, der am Rahmen 13 befestigt ist und mit einem Ritzel 30 in den aus Fig. 1 ersichtlichen Zahnkranz 27 am Tragelement 23 angreift, wodurch letzteres gedreht wird.

Aus Fig. 4 soll hauptsächlich die Ausschubvorrichtung 26 genauer zu erkennen sein. Sie ist fest mit dem Mast 7 verbunden und zum Ausgeben von Stückgut wird die mit einem Gummipuffer 31 versehene Kolbenstange 32 ausgefahren. Der Vollständigkeit halber sei vermerkt, daß für evtl. Reparaturen im Mast 7 auch noch ein aufklappbarer Zwischenboden 32 vorhanden ist.

0005169

-1-

fo/kr

**MAN  Lager- und Systemtechnik GmbH, 8000 München  50
und Licentia Patent-Verwaltungs-GmbH,
6000 Frankfurt 70**

Nürnberg, 16. Febr.1979

P a t e n t a n s p r ü c h e

1. Dynamischer Speicher für Stück- und/oder Schüttgut, insbesondere unterschiedlicher Art, dadurch
gekennzeichnet, daß dieser als Turmdrehspeicher
ausgebildet ist und eine senkrecht stehende, mit
wenigstens einer Füllöffnung (2) und einer Ausstoßöffnung (3) versehene Trommel (4) aufweist,
in der an einem zentrisch angeordneten Mast (7)
ein in senkrechter Richtung verschiebbar angebrachter Rahmen (13) vorgesehen ist, an dem ein

No8.8599

./.

mehrere Etagen und in jeder Etage am Umfang verteilt mehrere fachartige Lagerplattformen (24) aufweisendes Tragelement (23) drehbar gelagert ist.

2. Dynamischer Speicher nach Anspruch 1, dadurch gekennzeichnet, daß die Füllöffnungen (2) und die Ausstoßöffnungen (3) je nach dem Aufstellungsort des Turmdrehspeichers an unterschiedlichen Stellen am Umfang der Trommel und/oder in unterschiedlichen Höhen anbringbar sind.

3. Dynamischer Speicher nach den Ansprüchen 1 und 2, dadurch gekennzeichnet, daß die Füllöffnungen (2) und/oder die Ausstoßöffnungen (3) als Türen (10) oder Klappen (9) ausgebildete Verschlußeinrichtungen aufweisen, und daß diese Verschlußeinrichtungen (9, 10) leicht zugängig angeordnet und manuell, hydraulisch, pneumatisch oder elektrisch betätigbar sind.

4. Dynamischer Speicher nach Anspruch 1, dadurch gekennzeichnet, daß der Mast (7) starr mit einem Fundament (8) verbunden ist und - im Querschnitt gesehen - die Form eines Kastens aufweist, an dessen Außenflächen Führungsschienen (11) für den Rahmen (13) angebracht sind.

5. Dynamischer Speicher nach den Ansprüchen 1 und 4, dadurch gekennzeichnet, daß der Mast (7) als Schweißkonstruktion in Gitterform (5, 6) ausgeführt ist.

./.

08.8599

6. Dynamischer Speicher nach den Ansprüchen 1 und 4, dadurch gekennzeichnet, daß der am Mast (7) verschiebbare Rahmen (13) Führungsrollenpaare (12) aufweist, welche die Führungsschienen (11) von beiden Seiten umgreifen und bei Bewegung an diesen abrollen.

7. Dynamischer Speicher nach Anspruch 1, dadurch gekennzeichnet, daß die Höhe des Mastes (7) derart ausgelegt ist, daß durch Heben oder Senken des Rahmens (13) und durch Drehen des die Lagerplattformen (24) aufweisenden Tragelementes (23) jede Lagerplattform (24) zu den Füllöffnungen (2) und zu den Ausstoßöffnungen (3) verlegbar ist.

8. Dynamischer Speicher nach Anspruch 1, dadurch gekennzeichnet, daß die Lagerplattformen (24) in radialer Richtung nach außen verlaufend an wenigstens einem ringförmigen Tragelement (23) befestigt sind.

9. Dynamischer Speicher nach Anspruch 1, dadurch gekennzeichnet, daß die Antriebe für den Rahmen (13) und/oder für das Tragelement (23) hydraulisch, pneumatisch oder mittels eines Elektro-motors (19, 28) erfolgen.

1o. Dynamischer Speicher nach Anspruch 1, dadurch gekennzeichnet, daß als Antrieb für den Rahmen (13) eine Seil-Hubwinde (21) vorgesehen ist und daß diese Seil-Hubwinde (21) über ein Getriebe (2o) durch einen Elektromotor (19) angetrieben wird.

./.

-4-

11. Dynamischer Speicher nach Anspruch 1, dadurch gekennzeichnet, daß im Bereich der Ausstoßöffnungen (3) am Mast (7) angeordnete Ausschubvorrichtungen (26) für das Stück- oder Schüttgut (25) vorgesehen und als hydraulisch oder pneumatisch angetriebe Hubzylinder ausgebildet sind.

12. Dynamischer Speicher nach Anspruch 1, dadurch gekennzeichnet, daß im Bereich der Ausstoßöffnungen (3) am Mast (7) angeordnete Ausschubvorrichtungen (26) für das Stück- oder Schüttgut (25) vorgesehen und manuell oder mittels eines Elektroantriebes betätigbar sind.

No8.8599

Fig.1

**Fig. 2**

**Fig. 4**

# Fig. 3

Europäisches Patentamt

# EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | B 65 G 7/04 |
| X | FR - A - 1 570 432 (UNELEC)  * Das ganze Dokument * | 1,2,3, 4,6,7, 8,9, 10,11, 12 | |
| | DE - A - 1 556 626 (LORENZ)  * Das ganze Dokument * | 1,8,9, 11 | |

**RECHERCHIERTE SACHGEBIETE (Int. Cl.²)**

B 65 G
B 23 Q

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-07-1979 | OSTIJN |

EPA form 1503.1  06.78